# EUROPEAN PATENT APPLICATION

(11) **EP 1 150 198 A2**
(43) Date of publication of application: **31.10.2001**
(21) Application number: 01870084.9
(22) Date of filing: 19.04.2001
(51) Int. Cl.: G06F 1/00

(54) **System and method for on-line copyright management**

(30) Priority: 19.04.2000 GB 0009634
(71) Applicant: Info2Clear NV-SA, 1070 Brussel (BE)
(72) Inventor: Spooren, Jan, 2600 Berchem (BE); Belpaire, Anthony, 9000 Gent (BE)
(74) Representative: Bird, William Edward

(57) **Abstract**

A system for automated registration of digital content, i.e. a work in electronic form is described, requiring no special human interaction from the content publisher. Before publication, the digital content is electronically and automatically sent to a trusted third party, which generates a time stamped and digitally signed certificate which can be used as proof of publication date.

A method is described to 'tag' digital content with an icon and hyperlink that can be clicked in order to properly obtain reproduction rights to digital content, according to pricing and rules (e.g. geographical restrictions, different license rules for different time frames, purchase quantity dependent pricing schedules) set by the publisher. The third party copyright buyer then receives a digitally signed copyright certificate, granting the use of the work according to certain rules and restrictions to the copyrighted material. This certificate constitutes the written permission from the publisher, necessary to reproduce the material and to prove the presence of a license. The system is preferably operated by a *trusted third party.*

A method is also described for on-line and real-time registration of works in electronic format having digital content in which intellectual property rights such as copyright can subside, resulting in a digitally signed, time stamped certificate, the validity of which can be verified on-line. The method may provide the possibility for a content owner to specify the rules, pricing details and behavior for on-line sales of limited reproduction rights.

## Description

### FIELD OF THE INVENTION

The present invention relates to automated computer based copyright registration and on-line copyright sales of multimedia works in electronic form having digital content.

### BACKGROUND OF THE INVENTION

The Internet operated as the World Wide Web comprises a large number of interlinked computers and telecommunications networks. The computers exchange information using protocols, described for instance in "Internet Standards and protocols", Dilip C. Naik, Microsoft Press, 1998 as well as allowing e-mail electronic transfer as described for instance in "Internet e-mail, protocols, standards and implementations" L. Hughes, Artech House, 1998. A typical protocol is the TCP/IP stack. This allows a server based computer system (i.e. including a web server operated at a web site) to send electronic information, e.g. graphical, auditory, video, text information with access links available on web pages, to a remote client computer system. The remote client system can display (visually and/or playback) the information and can usually download it to a local electronic storage system, e.g. a hard drive on a computer. Each resource on the web has a Uniform Resource Locator ("URL"). To view a specific web page, a client computer system specifies the desired URL in a request, e.g. in accordance with the Hypertext Transfer Protocol ("HTTP"). The request is automatically forwarded to the relevant web server that supports the web page requested. On receipt of this request the web server sends the web page to the client computer system where it can be displayed using a "browser". A browser is a special purpose application program that executes the requesting and display of web pages. Web pages may be augmented with executable scripts, e.g. written in the Java programming language, which provide added executable programs into the web page, as described for instance in "Dynamic HTML in action", W. J. Pardi and E. M. Schurman, Microsoft press, 1998. It is also known to provide encryption services to encrypt electronic documents as well as to provide digital signatures to a document and to provide digital certificates. It is also know to provide secure links across the Internet and to allow secure financial transactions such as payments using secure link protocols such as the Secure Sockets Layer (SSL).

Servers and computers on the web may be personal computers, e.g. an IBM compatible or Macintosh compatible personal computer with a microprocessor, nonvolatile memory storage as well as Input/output ports and communications software for running on the computer and for accessing the Internet via a suitable provider. Servers and computers may also be workstations, e.g. UNIX workstations.

With the explosive growth of the World Wide Web, there has been a growing concern about copyright infringement. Today, virtually every business is required by market pressure to open up a web site presenting the company's assets. However, publishing on the World Wide Web often results, not only in content being reused by other parties without proper acquisition of the reproduction rights, but in difficulties in proving ownership of copyrights: In the past, when publishing on plain paper, it was often possible to properly date the first publication, resulting in clear proof of ownership. However, when publishing digitally, it is difficult and often impossible to date the given digital content: a file on disk does carry a creation date, but this date is dependent upon a local computer clock which can be set locally easily to any time and can easily be modified, and therefore does not constitute proof of a publication date. Hence, when publishing on the web, the publisher not only risks unauthorized copying of digital content, but also risks loosing evidence of the existence of copyright on the content, and thus to not being able to sufficiently prove the ownership.

US 5,83,351 proposes a method of using the Internet and a computer system to locally generate copyright registration forms for submission to a certification agency such as The US Copyright Office. However, this system does not provide a convenient way of offering the copyrighted work for sale on the Internet and for providing security to both the offerer and the purchaser that the work has a specific author date and has been licensed by the owner of the copyright.

US 5,765,152 proposes using the Internet and a computer system to package a work in a secure electronic form, to register it on a registration server and to provide on-line licensing and copyright management. Each electronic work is provided with a permissions set of instructions as to how the work may be purchased. Without a license a third party may view the unpackaged work under certain restrictions, e.g. cannot save or transfer the work. To obtain further rights auxiliary permissions need to obtained from the authentication server. The electronic work is authenticated through digital signatures and optional encryption.

### SUMMARY OF THE INVENTION

The present invention may provide a system for automated registration of digital content, i.e. a work in electronic form, requiring no special human interaction from the content publisher. Before publication, the digital content is electronically and automatically sent to a trusted third party, which generates a time stamped and digitally signed certificate which can be used as proof of publication date.

The present invention also provides a way to 'tag' digital content with an icon and hyperlink that can be clicked in order to properly obtain reproduction rights to digital content, according to pricing and rules (e.g. geographical restrictions, different license rules for different time frames, purchase quantity dependent pricing schedules) set by the publisher. The third party copyright buyer then receives a digitally signed copyright certificate, granting the use of the work according to certain rules and restrictions to the copyrighted material. This certificate constitutes the written permission from the publisher, necessary to reproduce the material and to prove the presence of a license. The system is preferably operated by a *trusted third party*.

The present invention may provide a method for on-line and real-time registration of works in electronic format having digital content in which intellectual property rights such as copyright can subside, resulting in a digitally signed, time stamped certificate, the validity of which can be verified on-line through an HTTP user interface. The method may provide the possibility for a content owner to specify the rules, pricing details and behavior for on-line sales of limited reproduction rights.

The present invention may also provide a system for automated registration, fully integrated with a publisher's publishing system, resulting in the immediate registration of any digital content (articles, text, photographic images, video, audio and any other digital representation of matter which can be stored electronically an in which intellectual property rights can subside) before this digital content is first published and requiring no human intervention from the publisher or content creator. The present invention may also provide a method for describing pricing structures for licensing the intellectual property rights and/or use of the electronic works, including predefined pricing behavior allowing limited reproduction rights to be sold on-line, either with or without exclusivity deals and pricing and allowed categories of use which can vary in time. The present invention may provide a system for automatically executing these predefined pricing structures, usage categories and exclusivity deals in such a way that an exclusivity deal is fully guaranteed, i.e. in a case of a 'race condition' where two parties try to obtain the exclusive rights to digital content only one party will obtain the rights.

The present invention may provide a system for on-line generation of reproduction rights certificates, which provide evidence that copies of an electronic work were obtained in accordance with specific rules defined and therefore accepted by the author of the work.

In one aspect of the present invention a method is provided for managing electronic media in which copyright subsides, comprising the steps of: providing a digital representation of a work with digital content and a permissions data set specifying a set of rules concerning authorized use of the work, the rules including a relationship between at least one time measure and a permission or license term, registering the work on a server, the server being connected for on-line data transfers with at least one computer, examining the set of rules in response to a request to license the work, comparing the time measure with a clock time at the receipt of the request and transmitting a set of license terms from the server to the computer in accordance with the relationship between the at least one time measure and the permission or license term; and transmitting a number of copies of the work to the computer on receipt of a response from the computer indicating acceptance of the terms, the number having the value of at least one. The computer is typically a remote computer in client status accessible via the Internet. A copyright certificate certifying the number of copies transmitted and at least a part of the permissions data set valid for the copies may be generated, and the certificate signed digitally. The copyright certificate is preferably stored on the server. A hyperlink reference to an on-line accessible version of the copyright certificate is preferably generated and transmitted to the computer. The digital certificate may be signed with a private key of a person who is not the owner of the copyright.

In another aspect the present invention provides a system for managing electronic media in which copyright subsides, comprising: a server connected for on-line data transfer with at least one computer, the server having: means for accessing a permissions data set specifying a set of rules concerning authorized use of a digital representation of a work with digital content, the rules including a relationship between at least one time measure and a permission or license term, means for examining the set of rules in response to a request to license the work, means for comparing the time measure with a clock time at the receipt of the request and for transmitting a set of license terms from the server to the computer in accordance with the relationship between the at least one time measure and the permission or license term; and means for transmitting a number of copies of the work to the computer on receipt of a response from the computer accepting the terms, the value of the number being at least one. Means for generating a copyright certificate certifying the number of copies transmitted and at least a part of the permissions data set valid for the copies may be provided as well as means for digitally signing the certificate. Further, means for storing the copyright certificate on the server may be provided. Also, means for generating a hyperlink reference to an on-line accessible version of the copyright certificate may be provided as well as means for transmitting the hyperlink reference to the computer. The means for determining the clock time preferably determines the time from at least two reference clocks.

In a further aspect the present invention provides a method for managing electronic media in which copyright subsides, comprising the steps of: providing a digital representation of a work with digital content and a permissions data set specifying a set of rules concerning authorized use of the work, receiving the work and the permissions data set at a certification server operated by a third party and storing the work electronically, generating from the work and the permissions data set a publishing certificate signed with a digital signature of the third party, and storing the publishing certificate electronically. The publishing certificate may include a time stamp, the time stamp being determined from a clock time. The clock time may be determined by reference to at least two reference clocks. The publishing certificate may be transmitted to the computer. A hyperlink reference may be transmitted to the computer, the hyperlink reference directing a browser to a location where the work is stored.

In a further aspect the present invention provides a system for managing electronic media in which copyright subsides, comprising: means for providing a digital representation of a work with digital content and a permissions data set specifying a set of rules concerning authorized use of the work, means for receiving the work and the permissions data set at a certification server operated by a third party, means for storing the work electronically, means generating from the work and the permissions data set a publishing certificate signed with a digital signature of the third party, and means for storing the publishing certificate electronically. The means generating the publishing certificate may generate the certificate from the permissions data set, a time stamp and the work, and further comprising a clock means for determining the time stamp. The clock means may include means for determining time by reference to at least two reference clocks. Means for transmitting the publishing certificate to the computer may also be provided. Also means for transmitting a hyperlink reference to the computer, the hyperlink reference directing a browser to a location where the work is stored may be provided.

### BRIEF DESCRIPTION OF THE DRAWINGS

Fig. 1 is a schematic representation of a copyright registration system in accordance with an embodiment of the present invention.
Fig. 2 is a diagram showing a connection between the Publisher's publishing system and the Publishing Proxy Server in accordance with an embodiment of the present invention.
Fig. 3 is a schematic representation of a copyright purchasing system in accordance with an embodiment of the present invention.
Fig. 4 is a schematic representation of a further copyright registration system in accordance with an embodiment of the present invention.
Fig. 5 is a schematic representation of a further copyright purchasing system in accordance with an embodiment of the present invention.
Fig. 6 shows a graphical representation of XML Publishing Data in accordance with an embodiment of the present invention.

### DEFINITIONS

'Digital content' as used in the present invention means the digital representation of any matter, such as text, drawings, photographs, music, video, computer programs, which can be subject of intellectual property claims. Digital content includes, but is not limited to: books, articles, reports and any other form of text that was created by an author, web pages, photographic still images, video sequences, audio sequences, computer programs and algorithms.

"Digital Signature": is discussed in "Applied Cryptography" by Schneier 1996. A signature should have the following properties:
1. Authenticity
2. Cannot be forged.
3. Cannot be re-used - it is limited to the signed document.
4. The signed document cannot be altered after it is signed without this being detected.
5. The signature cannot be revoked.

It is accepted that no signature system meets all of these requirements Generally a signature is included with a document and is not a separate item. With respect to digital signatures these relate to the use of a cryptographic routine to add a digital component to an electronic file which is related in some way to the author of the work. Both symmetric and asymmetric signatures are included within the scope of the present invention. A typical asymmetric scheme is RSA (Rivest, Shamir, Adleman, 1977). A typical symmetric scheme is the DES encryption algorithm.

A " Digital Certificate" is also discussed in Schneier and is considered to be a separate item, i.e. separate from the information which it certifies. It can therefore be re-used. Certification involves the application of a cryptographic routine to provide electronic file which verifies an event, transaction or statement when it is opened by the reverse cryptographic process.

### DESCRIPTION OF THE ILLUSTRATIVE EMBODIMENTS

The present invention will be described with reference to certain drawings and certain embodiments but is not limited thereto but only by the claims.

The information provided in this document is for purposes of filing of patent applications and patent offices may be make the information available to the public by file inspection or publication of patent application or patent documents as required by law. However, the applicant and authors retain all copyright in the information with respect to its use by third parties.

The invention present comprises two major subsystems called (a) *Get-a-Seal* and (b) *Get-a-Copy*. Get-a-Seal is used to register digital content and to optionally enter pricing information if it is the desire of the rights holder to sell limited reproduction rights for the digital content registered. The *get-a-seal*.*com* service provides publishers with a certificate useable in the proof of possession of intellectual property rights. A publisher uploads digital content to a web site of a trusted party. After on-line payment (or in case of registered publishers, after a record was written to the billing database for monthly invoicing) the publisher receives a time-stamped and signed certificate from the trusted party, stating that the work has been submitted of which a cryptographic message digest is given at the exact date and time to the trusted party. The certificate therefore constitutes proof useable in disputes over possession of certain intellectual property rights such as copyright.

Get-a-Copy can be used by the general public to obtain reproduction rights to digital content that was previously registered using Get-a-Seal. The get-a-copy service allows third parties to purchase limited reproduction rights for works that were registered by publishers on the Get-a-seal.com service.

The buyer of reproduction rights receives a Copyright Certificate. The Copyright Certificate is time stamped and may optionally contain reference to a permissions data set, e.g. the number of allowed reproductions and/or the usage category for the reproductions, the identification of the work (Message Digest) an identification of the Original Publisher and copyright holder and the level of certainty with which the trusted party has established the identity of the publisher. The copyright certificate constitutes proof for the buyer that certain reproduction rights were purchased from the original publisher.

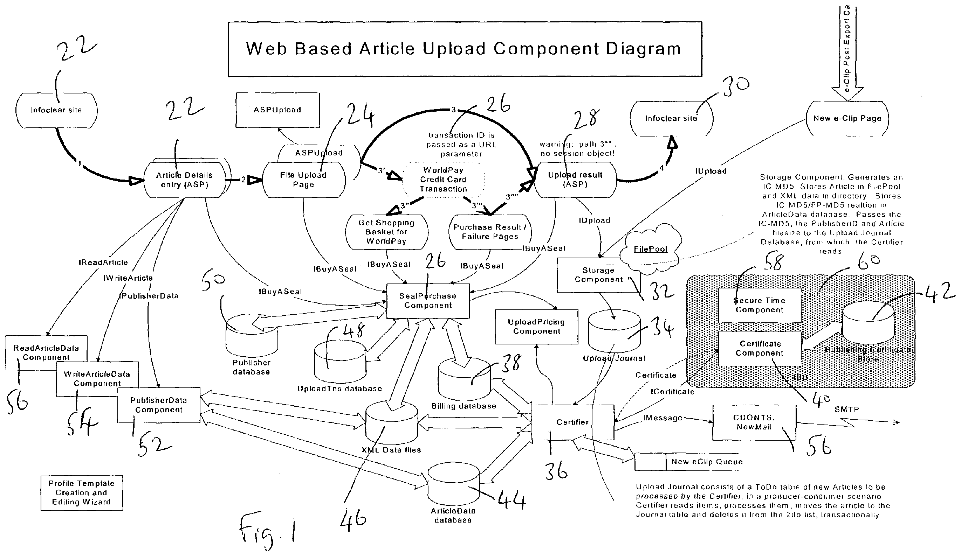

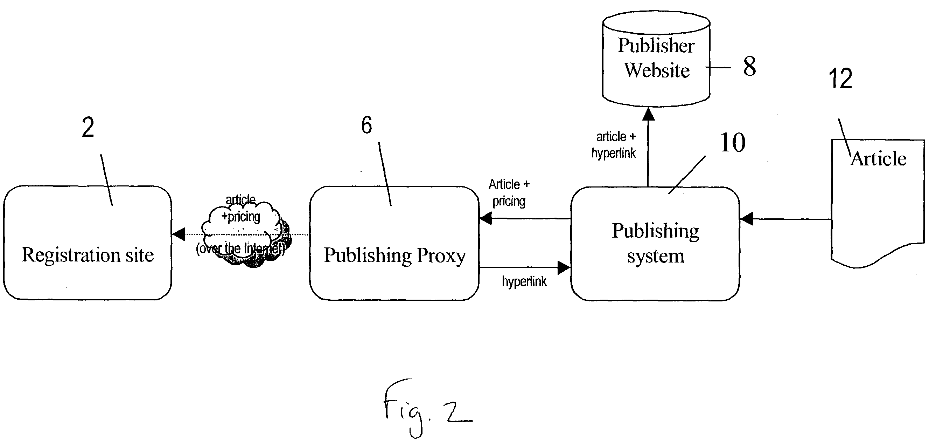

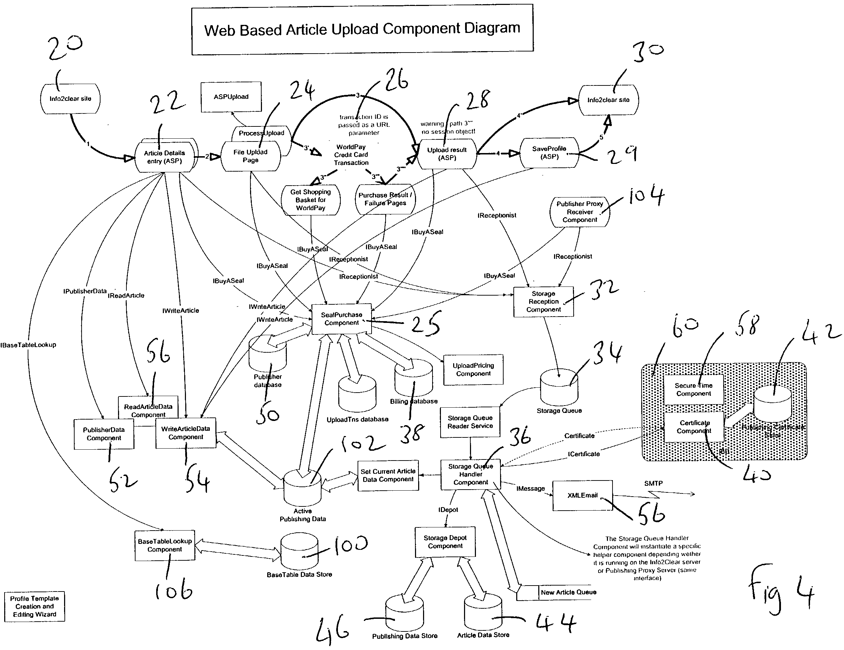

The Get-a-Seal system is available through at least two operating interfaces both operated by the trusted party each of which constitutes an embodiment of the present invention: (a) an *on-line Get-a-Seal web service* which will be described with reference to Figs. 1 and 4 and (b) A *Publishing Proxy Server* shown schematically in Fig. 2.

The Get-a-Seal on-line web service is used by digital content right holders who wish to make use of the present invention (see Fig. 1), without the cost involved in deploying a separate Publishing Proxy server at their site (see Fig. 2). The on-line Get-a-Seal system allows content owners to upload a piece of digital content. The content owner is presented with a form for registering the work and enters the details of the work on this form such as its author, the description (i.e. title), and selects a Publishing Profile Template that describes the reproduction rules and pricing. A cryptographic Message Digest is then created on-line. An e-mail is then sent to the content owner, containing a publishing certificate and providing a hyperlink to the get-a-copy page for selling the reproduction rights for the registered digital content.

An exemplary sequence of method steps for this embodiment is provided below:
1. The publisher starts up a browser on a computer system and points the browser in step 20 to the http://www.get-a-seal.com site or follows a hyperlink to the site from another site.
2. The publisher is presented with a form for completion in step 22. When a piece of digital content is registered with the Get-a-Seal system, the rights holder preferably adds some meta-data describing the digital content. For example, the publisher enters the details of the work, e.g. its author, a short description (i.e. a title), a set of keywords, the type of document (text, photograph, audio, video, etc). This meta data is called the *Publishing Data 52.* The data entered on the form can be written 54 or read 56 from the memory where a database 46 is stored. The Publishing Data 52 contains some work specific information (its author, creation date, keywords, description, abstract, etc.), some publisher specific information (name, ID, logo hyperlink), and a reproduction profile.
3. The publisher also enters the reproduction profile onto a suitable form. The reproduction profile file forms part of the permissions data set. The profile determines if and when the information can (or cannot) be sold and if so, at which price. Various timing schedules can be entered freely so that pricing or other permissions may be changed automatically with elapse of time. The reproduction profile also determines a number of price categories for which reproduction rights are for sale. Each category has its own pricing table. In each rule, certain pricing categories can be allowed or disallowed. Pricing can be multiplied by a certain weight factor and a minimum number of reproductions necessary for a transaction can be set. Categories can be freely defined by the publisher. They could e.g. be 'reproduction in print for commercial use', 'reproduction in print for non-profit use', 'reproduction on the web for commercial use', or similar. In order to make it easier for publishers to manage the reproduction profiles, the publisher can create a number of standard reproduction profile templates or may be provided therewith by the trusted party. The publisher can select one of these templates to base the reproduction profile on. The profile for the work is then copied from the template and, if necessary, edited further by the publisher using the read and write functions 54, 56.
4. The work is uploaded by the publisher to the website of the trusted third party using HTTP POST in step 24.
5. Payment is controlled by a software component "Seal Purchase" 25 running on the server. If the publisher is known (details available in the publisher database 50) and has a sound credit record, a record is logged in the billing database 38, which will result in an invoice, e.g. at the end of the month. If the publisher is not known, or if the publisher does not have a clean credit record, the publisher will be redirected to an on-line credit card payment page or other payment method. Preferably, the process only continues when the on-line payment transaction was accepted by the on-line payment service. The transaction details and result are stored in a transaction database 48.
6. The publisher receives an overview of the submitted work, its cryptographic message digest and a notification that the work was accepted for registration, e.g. by e-mail 56 or while on-line via the Internet.
7. The work is stored by the trusted party in a database 44. A publishing certificate is generated by a certifier 36 in co-operation with a certification secure server system (CSSS) 60. The certificate contains the work's message digest, a timestamp obtained from a secure clock 58 and is provided with a digital signature, e.g. is signed with the private key of the trusted party 40.
8. The publishing certificate is sent to the publisher using e-mail 56. The e-mail also contains a fragment of HTML code, which the publisher can paste into a web page or other web-accessible documents. The HTML fragment can be configured as a get-a-copy icon and hyperlink that provides a link to the get-a-copy page for this copyrighted work which is located at a website of the trusted third party. On this website other third parties can purchase the reproduction rights to this work. The hyperlink in this fragment uses the message digest of the work.
9. If allowed so by the Publishing Profile, a web page is built to represent the work. This web page can be used by the trusted third party's search-engine for local searching and retrieval purposes or to grant potential buyers of the reproduction rights a preview of the information. In case the work is a photograph, the shown information can be a thumbnail version, a stamped version, the complete photograph, an abstract of the photograph, a (restricted) PDF version or no information at all. In case the work is text, an abstract can be given, the complete text, only the first *n* lines of the text, a (restricted) PDF version or no information at all. In case the work is an audio sequence, a reduced quality version, a shortened version, the integral version or none can be given, again, according to the publisher's wishes as defined in the Publishing Profile.
10. A copy of the publishing certificate is kept at by the trusted party, for instance at least in a secure certificate database 42.

In accordance with another embodiment of the present invention a Publishing Proxy Server 6 (also referred to as *Publishing Proxy*) is a server (see Fig. 2), which is located at the digital content rights owner's site and is connectable to the website 2 of the trusted party through a telecommunications network such as the Internet or a dedicated network such as a Local or Wide Area Network (LAN or WAN). It is a server that integrates closely with the digital content owner's publishing system 10 which may include the publisher's website 8. The digital content right owners can choose one or more Publishing Profile Templates on the publishing proxy, to specify pricing information and rule sets that apply for each registered piece of digital content 12. These rule sets can define, for example, how the reproduction right owner's pricing of a piece of digital content will change in time as well as other rules such as price/quantity relationships and/or price/form of reproduction relationships. It also may allow the content owner to set certain restrictions, such as geographical restrictions (e.g., rights may only be sold/purchased in the U.S.A.), reproduction grants that are limited in time (e.g. an article can only be reproduced on a website for a period of one month or the license is free of charges 5 years after original registration), or limited in the intended use (e.g. the article cannot be bought and used for political use). Different pricing categories can be defined according to the intended use of the digital content (e.g., different pricing when used for commercial use than for non-profit use).

When the Publishing Proxy 6 receives a new piece of digital content 12 from the Content Owner's Publishing System 10, the Publishing Profile for this digital content is generated using, for example, a selected Publishing Profile Template which is presented to the publisher as a form and the input data by the publisher necessary to complete this form. A Cryptographic Message Digest from the digital content is then calculated by the Publishing Proxy 6. An HTML fragment is created on the Publishing Proxy 6 that can be pasted onto the Content Owner's web pages on the website 8 in order to provide a hyperlink to the get-a-copy.com web pages of the trusted party held at the website 2 of the trusted party. Third parties can use the hyperlink to be transferred automatically to the trusted party website 2 and from there to purchase reproduction rights in the work. The fact that this hyperlink, containing the Cryptographic Message Digest is created at this time, on the premises of the Content Owner, guarantees that no delays are introduced by integrating the Publishing Proxy 6 with the Content Owner's Publishing system 10. The content owner's publishing system 10 can add the hyperlink to its database and start displaying the hyperlink, even before the work has been registered on the Get-a-Seal system.

The work and the Publishing Profile are sent to the website 2 of the trusted third party in a secure manner, e.g. using retry scheduling, error detection and IPSec or SSL encryption. At the trusted third party, the publisher is checked for credit worthiness and if the check is successful, the work is stored in the Get-a-Copy system in a suitable and secure storage medium, a publishing certificate is generated, containing the work's cryptographic message digest and a timestamp and which is signed digitally, e.g. using an asymmetric digital signature system such as provided by the RSA algorithm. In this case the publishing certificate is signed with the trusted third party's private key of the asymmetric encryption system.

If allowed so by the Publishing Profile, a web page is automatically built on the get-a-copy system to represent the work on the trusted party website 2. This web page can be used by the content owner to grant potential buyers of the reproduction rights a preview of the information automatically. For example, in case the work is a photograph, the shown information can be a thumbnail version, the complete photograph, an abstract of the photograph, or no information at all. For example, in case the work is a text document, an abstract can be given, the complete text, only the first n lines of the document, or no information at all. For example, in case the work is an audio sequence, a reduced quality version, a shortened version, the integral version or nothing can be given, again, according to the publisher's wishes as defined in the Publishing Profile. A copy of the publishing certificate is kept at the trusted third party.

An exemplary sequence of events for this embodiment is provided below:
1. On-site at the publisher's, a Publishing Proxy machine is installed or a special software agent is loaded onto a local computer. The Publishing Proxy 6is connected directly to the publisher's publishing system 10. The editors using the publishing system can choose a Publishing Profile Template on the publishing system.
2. When the Publishing Proxy 6 receives a work, the Publishing Profile is generated using the selected Template. A Cryptographic Message Digest is calculated. An HTML fragment is created on the Publishing Proxy 6 that can be used to paste onto HTML web pages in order to provide a hyperlink to the get-a-copy.com pages at the trusted third party website, which third parties can use to purchase reproduction rights.
3. The work and the Publishing Profile are sent to the trusted third party, using a secure method, e.g. retry scheduling, error detection and IPSec encryption.
4. At the trusted third party, the publisher is checked for credit worthiness and if the check is successful, a publishing certificate is generated. The procedure detailed with respect to the previous on-line embodiment is then followed, starting with step 7.

An exemplary set of method steps for an embodiment of the present invention using the special software agent is provided below:
1. The publisher uses a special 'agent' (computer application) loaded onto a computer system at the publisher's premises to register information with the trusted third party.
2. The agent allows the publisher to select one or more works stored on the computer system in electronic format and to submit them for registration. The publisher can then set the Publishing Profile for this work, optionally using locally stored Reproduction Profile Templates.
3. The agent software immediately calculates the Cryptographic Message Digest for the work, allowing the publisher to share hyperlinks to the preview information or to the get-a-copy.com reproduction rights selling web page at the trusted third party.
4. The agent sends the work and its Reproduction Profile to the trusted third party in a secure manner, e.g. the agent uses error detection and retry scheduling to send the work and the Publishing Data via the Internet. The work and the Reproduction Profile may be encrypted to ensure confidentiality.
5. At the trusted third party, the publisher is checked for credit worthiness and if the check is successful, a publishing certificate is generated. The procedure for the on-line registration embodiment described above starting at step 7 is then followed.

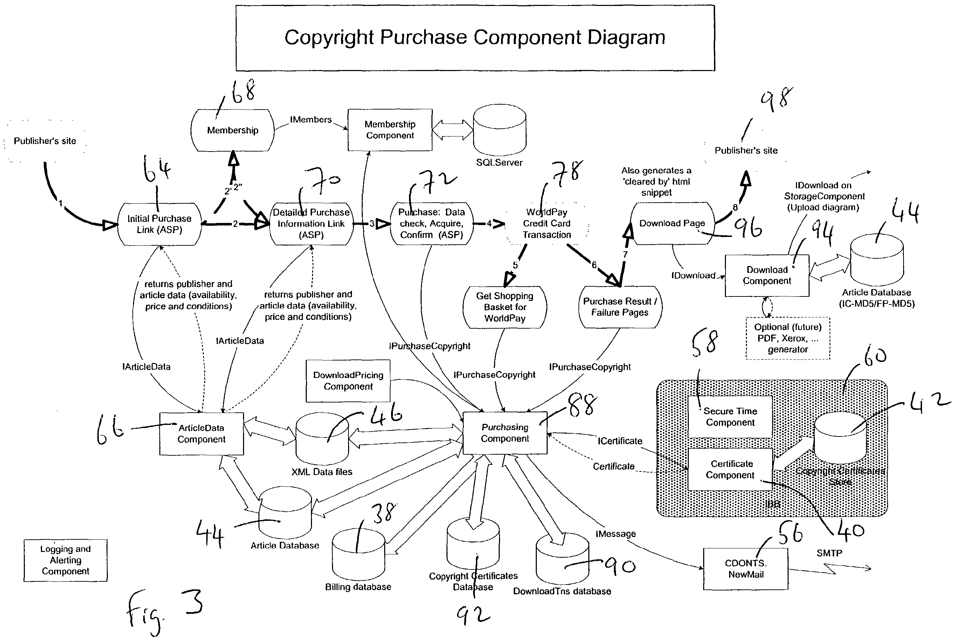

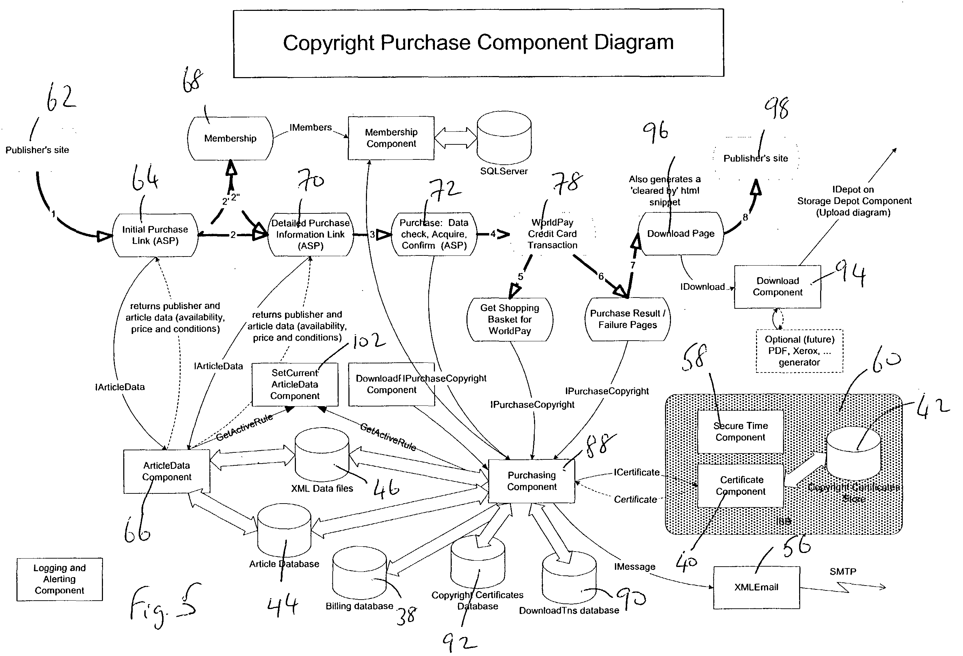

The get-a-copy.com service embodiments in accordance with the present invention allow third parties to purchase limited reproduction rights for works that were registered by publishers on the Get-a-seal.com system described above (see Figs. 3 and 5). Reference numbers in Figs. 1 to 5 which are the same refer to the same component. The buyer of reproduction rights will receive a Copyright Certificate. The Copyright Certificate is time stamped and contains the number of allowed reproductions, the usage category for the reproductions, the identification of the work (Message Digest) and an identification of the Original Publisher and copyright holder. The copyright certificate constitutes proof for the buyer that certain -limited- reproduction rights were purchased from the original publisher.

An exemplary sequence of method steps is given below (see Fig. 3):
1. The potential buyer of reproduction rights starts up a web-enabled computer and a browser (step 62) and transfers to the purchasing page of the trusted third party located on the web site thereof, by means of a URL containing the Cryptographic Message Digest of the work. Typically, (but not necessarily) this URL could be a hyperlink on the content owner's website, provided in the HTML fragment that the trusted third party provided to the publisher, as has been described above
2. In step 64 the purchasing page clarifies to the potential buyer, that this page can be used to purchase the reproduction rights to works detailed on or referred to on this page. It can also illustrate with a few example cases why this can be necessary. It provides the potential buyer with an overview of the currently valid categories for which the reproduction rights are for sale by obtaining the relevant data in step 66 from the relevant database 46. The currently valid categories may change depending upon the time/permissions relationship defined in the work profile as entered by the publisher. Only the currently valid categories are usually displayed, categories valid at other dates need not be displayed but the present invention is not limited thereto. The potential buyer can then select a category of reproduction rights. The buyer may be checked for membership in step 68.
3. The potential buyer is presented with a current price table for the selected category. The price table displays the price per reproduction, for a certain range of desired reproductions. This allows for a price per reproduction that decreases for larger numbers of desired reproductions. The currently valid prices may change depending upon the time/permissions relationship defined in the work profile as entered by the publisher. The rules of the permissions data set are read by the purchasing component 88 and interpreted. This involves comparing the current time with the times and durations specified in the time dependent rules and selecting the appropriate rule based on this comparison. Only the currently valid prices are usually displayed, prices valid at other dates need not be displayed but the present invention is not limited thereto.
4. In step 70 the buyer can enter the desired number of reproductions. Having selected a number and price of reproduction rights the transaction may be added to a shopping basket for example. The payment is controlled by a software element 88. On submission of the ordered items for payment, the buyer is presented with a credit card information entry page. The credit card transaction is recorded in the transaction database 90. Alternatively, when the buyer is a subscriber to the system run by the trusted third party, with a confirmation page showing the credits that will be deducted from the buyer's account, and the amount of credits left. In the latter case the billing database 44 is updated
5. After purchase, the work is downloaded to the buyer in steps 94, 96 by accessing the relevant database 44. A Copyright Certificate is generated using a certification secure server system (CSSS) 60, stating the number of reproductions paid for, the category of reproduction chosen by the buyer, the identity of the buyer, the identity of the publisher. This certificate is signed with one of the trusted third party's private keys (40), ensuring that this certificate constitutes proof of purchase for the buyer. The certificate is sent to the buyer by suitable means, e.g. by using e-mail 56. A copy is kept at the trusted third party; e.g. stored in the certificate database 42. Preferably, the certificate is also duplicated on to a more accessible database 92. The certificate can then be verified on-line more esaily. If necessary the certificate can include a date stamp (58).
6. An HTML fragment is generated that contains an icon and a hyperlink to the on-line version of the Copyright Certificate kept at the trusted third party. The buyer can add the HTML fragment to the reproductions received or made, in order to prove the licensing of the reproduction rights. The HTML fragment is sent to the buyer using e-mail 56, for example.
7. The buyer is transferred back to the web page reached by following the initial hyperlink to the purchasing page in step 98.

The present invention makes use of a system for generating Publishing Certificates and Copyright Certificates. This system includes two components: (a) A Secure Time Component 58, making sure that the system time on the certification server located in the certification secure server system (CSSS, 60) is always kept accurate and is virtually impossible to be tampered with and (b) a certification component 40, that generates formatted certificates which are digitally signed. The formatted certificates may be in a suitable mark-up language such as XML. The certification component 40 and the CSSS 60 are not accessible from the Internet by third parties.

The XML-formatted certificates contain human-readable text in a suitable format such as the ASCII character representation. The general format of the certificates is as follows: 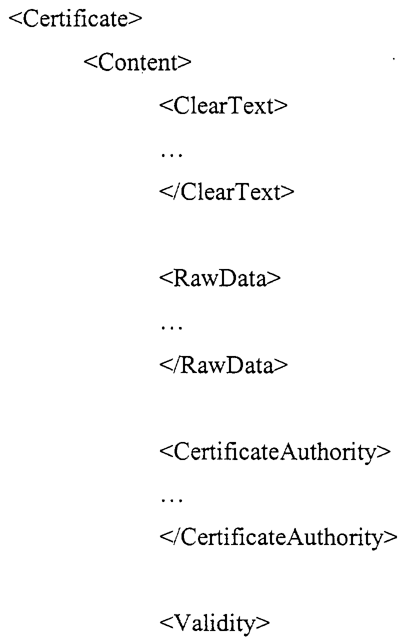 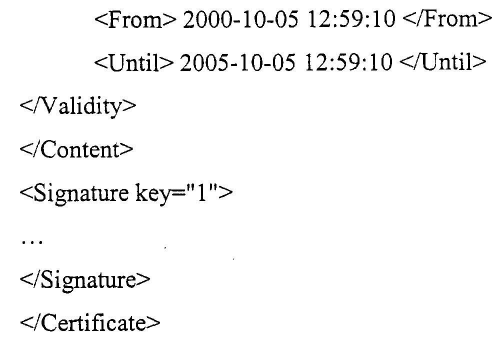 The certificate's <ClearText> element contains human readable text that can be presented to an end-user. The <RawData> element contains all data fields from the <ClearText> element, listed in separate XML elements for convenient machine-reading of the certificate. The <CertificateAuthority> identifies the trusted third party that generated this certificate and contains a hyperlink to an on-line Certificate Check page on the World Wide Web, e.g. available at the web site of the trusted third party, on which the validity of the certificate can be verified on-line. A digital signature, generated with the private key stored on the CSSS, protects them. The digital signatures are built using any suitable algorithm such as MD-5 and RSA. The digital signature covers all non-white space of the certificate's <Content> tag: Spaces (ASCII code 32), Carriage Returns (ASCII code 13), Line Feeds (ASCII code 10) and Tabs (ASCII code 9) are discarded from the digital signature calculation. This allows the certificate to be sent in e-mails, which can result in added line-breaks or in certain paragraph reformatting or indentation, whilst still keeping the digital signature intact. The digital certificate is a binary digital signature block, which is converted to hexadecimal notation in ASCII character representation, and added in the <Signature>-element of the XML-formatted certificate. The <Signature>-element possesses a *key* attribute, which indicates with which private key the certificate was generated. This mechanism allows for retiring keys, as a general security precaution or in the case of a private key becoming compromised. The certificate also carries a <Validity>-element, with two sub-elements: <From> and <Until> which indicate the certificate's validity time. The certificate contains a reference to the digital content it refers to, by means of Cryptographic Message Digest of the digital content. It is stored in the <ArticleID> element of the <RawData> element. Each certificate contains a unique certificate serial number, contained in decimal notation in the <CertificateSerialNo> element of the <RawData> element. The certificate serial number can only increase in time

The Secure Time component makes use of a random selection of a configurable number of Time Servers available on the Internet. A system using only one official time source (e.g. the German DCF atomic time source or the GPS Satellite Navigation system's time source) can be considered unsafe, since it constitutes a dependency on only one single time source. The Secure Time component uses an algorithm that eliminates extremes from the random time source pool and takes the average time over the remaining time sources. The Secure Time component makes sure when updating the time, that a time correction is never made towards the past, i.e. the system time can be delayed to compensate internal CSSS clock deviations or to incorporate leap-seconds, but can never be set back. This is a necessary condition to make sure that the serial numbers of the issued certificates will always increase with respect to the certificate generation time.

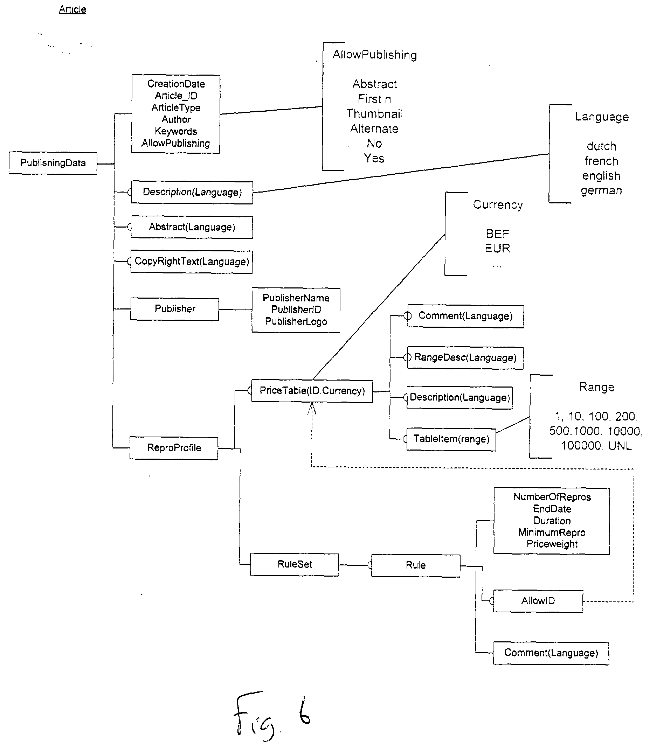

When a piece of digital content is registered with the Get-a-Seal system, the rights holder preferably adds some meta-data describing the digital content (see Fig. 6). This meta data is called the *Publishing Data 52.* The Publishing Data contains some work specific information (its author, creation date, keywords, description, abstract, etc.), some publisher specific information (name, ID, logo hyperlink), and the reproduction profile. This reproduction profile consists of one or more pricing (usage) categories and one or more rule sets that indicate how the pricing categories behave in time. Pricing categories or other permissions may be varied in time by specifying a duration (one month, one year, etc.) or by specifying end or begin dates. In each rule, certain pricing categories can be allowed or disallowed. Pricing can be multiplied by a certain weight factor and a minimum number of reproductions necessary for a transaction can be set. Each pricing category and each rule can have their own (multilingual) legal disclaimer, which is shown to the buyer before he buys the reproduction rights, and which are taken up into the Copyright Certificate. These legal disclaimers allow the publisher to restrict sales in certain geographic areas, to set time limits to certain usage categories or e.g. restrict use for political purposes.

The rule sets also allows for setting up exclusivity deals, that is the exclusive licensing of a work. This exclusivity deal is mentioned in a legal disclaimer, which is shown to the prospective buyer before purchase of the reproduction rights. This disclaimer is also taken up into the Copyright Certificate, which the buyer receives after a successful transaction. The exclusivity deal is set up by creating a first rule that expires after one transaction and a second rule that has all pricing categories disabled. This way, the rights to the digital content will only be sold once. The Get-a-Copy system is created in a strictly transactional way, making sure it is impossible to sell the same reproduction right twice in case of an exclusivity deal. Before someone is granted the right to purchase a reproduction right, all transactions to this digital content are blocked by placing a lock in the content's records, and a verification is made to make sure (a) no other transactions are going on and (b) the right is still for sale. While the transactions on this object are locked, the purchase is made. After the object is flagged as sold, transactions are no longer allowed. This resolves possible *'race conditions'* in the purchasing process for exclusivity deals.

All of the free text fields in the Publishing Data definition are multi-lingual:
These fields can be added in several language versions, allowing the Get-a-Copy product to be a fully multi-lingual product.

While the invention has been shown and described with reference to preferred embodiments, it will be understood by those skilled in the art that various changes or modifications in form and detail may be made without departing from the scope and spirit of this invention. For example, Fig. 4 shows an alternative system for registering copyright. The main differences compared with Fig. 1 are as follows: The profile is stored 29 after the transaction is complete by writing 54 into an active publishing data processor 102 as well as storing the complete publishing data in database 46. The active publishing data processor 102 extracts the current rule set for each work. This current rule may be effected by various event triggers such as by exceeding a number of copies sold, exceeding a time limit etc. depending upon the rules in the permissions data set. Due to the importance and complexity of this extraction for a large volume of works, it is controlled by a specific function. Also a base table database 106 has been added which stores messages to be displayed to the publisher in step 22. Fig. 5 shows an alternative purchasing scheme to that of Fig. 3. The main difference with respect to Fig. 3 is that a special active rule processor 102 is provided for extracting the current rule for determining the current purchase. In particular this function 102 is for comparing time dependent rules in the permissions data set and determining the currently active rule.

## Claims

1. A method for managing electronic media in which copyright subsides, comprising the steps of:
providing a digital representation of a work with digital content and a permissions data set specifying a set of rules concerning authorized use of the work, the rules including a relationship between at least one time measure and a permission or license term,
registering the work on a server, the server being connected for on-line data transfers with at least one computer,
examining the set of rules in response to a request to license the work,
comparing the time measure with a clock time at the receipt of the request and transmitting a set of license terms from the server to the computer in accordance with the relationship between the at least one time measure and the permission or license term; and
transmitting a number of copies of the work to the computer on receipt of a response from the computer indicating acceptance of the terms, the number having the value of at least one.

2. The method according to claim 1, further comprising the step of:
generating a copyright certificate certifying the number of copies transmitted and at least a part of the permissions data set valid for the copies, and
digitally signing the certificate.

3. The method according to claim 2, further comprising storing the digital copyright certificate on the server.

4. The method according to claim 2, further comprising the step of generating a hyperlink reference to an on-line accessible version of the copyright certificate and transmitting the hyperlink reference to the computer.

5. The method according to claim 1, wherein the digital copyright certificate is signed with a private key of a person who is not the owner of the copyright.

6. A system for managing electronic media in which copyright subsides, comprising:
a server connected for on-line data transfer with at least one computer, the server having:
means for accessing a permissions data set specifying a set of rules concerning authorized use of a digital representation of a work with digital content, the rules including a relationship between at least one time measure and a permission or license term,
means for examining the set of rules in response to a request to license the work,
means for comparing the time measure with a clock time at the receipt of the request and for transmitting a set of license terms from the server to the computer in accordance with the relationship between the at least one time measure and the permission or license term; and
means for transmitting a number of copies of the work to the computer on receipt of a response from the computer accepting the terms, the value of the number being at least one.

7. The system according to claim 6, further comprising:
means for generating a copyright certificate certifying the number of copies transmitted and at least a part of the permissions data set valid for the copies, and
means for digitally signing the certificate.

8. The system according to claim 7, further comprising means for storing the digital copyright certificate on the server.

9. The system according to claim 7, further comprising means for generating a hyperlink reference to an on-line accessible version of the digital copyright certificate and transmitting the hyperlink reference to the computer.

10. The system according to claim 6, further comprising means for determining the clock time from at least two reference clocks.

11. A method for managing electronic media in which copyright subsides, comprising the steps of:
providing a digital representation of a work with digital content and a permissions data set specifying a set of rules concerning authorized use of the work,
receiving the work and the permissions data set at a certification server operated by a third party and storing the work electronically,
generating from the work and the permissions data set a digital publishing certificate signed with a digital signature of the third party, and
storing the publishing certificate electronically.

12. The method according to claim 11, wherein the digital publishing certificate includes a time stamp, the time stamp being determined from a clock time.

13. The method according to claim 12, wherein the clock time is determined by reference to at least two reference clocks.

14. The method according to claim 11, further comprising the step of transmitting the digital publishing certificate to the computer.

15. The method according to claim 11, further comprising the step of transmitting a hyperlink reference to the computer, the hyperlink reference directing a browser to a location where the work is stored.

16. A system for managing electronic media in which copyright subsides, comprising:
means for providing a digital representation of a work with digital content and a permissions data set specifying a set of rules concerning authorized use of the work,
means for receiving the work and the permissions data set at a certification server operated by a third party,
means for storing the work electronically,
means generating from the work and the permissions data set a digital publishing certificate signed with a digital signature of the third party, and
means for storing the publishing certificate electronically.

17. The system according to claim 16, wherein the means generating the publishing certificate generates the certificate from the permissions data set, a time stamp and the work, and further comprising a clock means for determining the time stamp.

18. The system according to claim 17, wherein the clock means includes means for determining time by reference to at least two reference clocks.

19. The system according to claim 16, further comprising means for transmitting the digital publishing certificate to the computer.

20. The system according to claim 16, further comprising means for transmitting a hyperlink reference to the computer, the hyperlink reference directing a browser to a location where the work is stored.
